# EUROPEAN PATENT APPLICATION

(11) **EP 3 623 856 A1**
(43) Date of publication of application: **18.03.2020**
(21) Application number: 19196215.8
(22) Date of filing: 09.09.2019
(51) Int. Cl.: G02B 9/12, G02B 13/04, G02B 13/14

(54) **NARROW BANDPASS IMAGING LENS**

(30) Priority: 11.09.2018 US 201816127757
(71) Applicant: Rockwell Automation Technologies, Inc., Mayfield Heights, OH 44124 (US)
(72) Inventor: TILLEMAN, Michael M., Mayfield Heights, OH 44124 (US)
(74) Representative: Grünecker Patent- und Rechtsanwälte PartG mbB

(57) **Abstract**

For imaging objects in a field-of-view, a compound lens includes a primary lens, a secondary lens, and a tertiary lens. A combination of the primary lens, the secondary lens, and the tertiary lens has an F-number of not more than 1.25, a field-of-view of at least 70 degrees, and images objects from the field-of-view on a sensor.

## Description

### BACKGROUND INFORMATION

The subject matter disclosed herein relates to a narrow bandpass imaging lens.

### BRIEF DESCRIPTION

A narrow bandpass compound imaging lens for imaging objects in a field-of-view is disclosed. The compound lens includes a primary lens, a secondary lens, and a tertiary lens. A combination of the primary lens, the secondary lens, and the tertiary lens has an F-number of not more than 1.25, a field-of-view of at least 70 degrees, and images objects from the field-of-view on a sensor.

A system with a narrow bandpass lens for imaging objects in a field-of-view is also disclosed. The system includes a light source that generates pulsed light, a sensor that detects the pulsed light, and a compound lens. The lens includes a primary lens, a secondary lens, and a tertiary lens. A combination of the primary lens, the secondary lens, and the tertiary lens has an F-number of not more than 1.25, a field-of-view of at least 70 degrees, and images objects from the field-of-view on the sensor.

A method for detecting pulse input light is also disclosed. The method images objects from a field-of-view of at least 70 degrees and an F-number of not more than 1.25. The method collimates incident light rays, wherein a cone half angle of the collimated input light is less than 10 degrees. The method transmits active illumination of the collimated input light at a specified wavelength with Full Width at Half Maximum (FWHM) in the range of 2-30 nanometers (nm) about the specified wavelength and a roll off slope of not less than 10 decibels (dB)/nm. The method further focuses an image from the filtered input light on a sensor and detects the image with the sensor.

### BRIEF DESCRIPTION OF THE DRAWINGS

In order that the advantages of the embodiments of the invention will be readily understood, a more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1A is a side view schematic diagram of a compound lens according to an embodiment;
Figure 1B is a side view schematic diagram of a lens according to an alternate embodiment;
Figure 1C is a side view schematic diagram of light paths through a lens according to an alternate embodiment;
Figure 1D is a side view schematic diagram of a lens according to an alternate embodiment;
Figure IE is a side view schematic diagram of light paths through a lens according to an alternate embodiment;
Figure IF is a side view schematic diagram of a lens according to an alternate embodiment;
Figure 1G is a side view schematic diagram of light paths through a lens according to an alternate embodiment;
Figure 1H is a schematic diagram of an optical system according to an embodiment;
Figures 2A-2D are side view schematic diagrams of a lens with a stop according to an embodiment;
Figure 2E is a side view schematic diagram of a half-angle of a cone of incidence according to an embodiment;
Figure 3A is a side view schematic diagram of a lens with an entrance aperture and a field aperture according to an embodiment;
Figure 3B is a front view drawing of a stop according to an embodiment;
Figure 3C is a front view drawing of a stop according to an embodiment;
Figure 3D is a front view drawing of a sensor according to an embodiment;
Figure 4A is a schematic block diagram of a lookup table according to an embodiment;
Figure 4B is a schematic block diagram of a computer according to an embodiment;
Figure 5 is a schematic flow chart diagram illustrating one embodiment of a light pulse sensing method according to an embodiment;
Figure 6A is a graph illustrating Modulus of Optical Transfer Function (MTF) of a lens according to an embodiment;
Figure 6B is a graph illustrating the relative illumination of a lens according to an embodiment; and
Figure 6C is a graph illustrating the transmission spectrum of a bandpass filter according to an embodiment.

### DETAILED DESCRIPTION

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Furthermore, the described features, advantages, and characteristics of the embodiments may be combined in any suitable manner. One skilled in the relevant art will recognize that the embodiments may be practiced without one or more of the specific features or advantages of a particular embodiment. In other instances, additional features and advantages may be recognized in certain embodiments that may not be present in all embodiments.

These features and advantages of the embodiments will become more fully apparent from the following description and appended claims, or may be learned by the practice of embodiments as set forth hereinafter. As will be appreciated by one skilled in the art, aspects of the present invention may be embodied as a system, method, and/or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having program code embodied thereon.

Many of the functional units described in this specification have been labeled as modules, in order to more particularly emphasize their implementation independence. For example, a module may be implemented as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in software for execution by various types of processors. An identified module of program code may, for instance, comprise one or more physical or logical blocks of computer instructions which may, for instance, be organized as an object, procedure, or function. Nevertheless, the executables of an identified module need not be physically located together, but may comprise disparate instructions stored in different locations which, when joined logically together, comprise the module and achieve the stated purpose for the module.

Indeed, a module of program code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different storage devices, and may exist, at least partially, merely as electronic signals on a system or network. Where a module or portions of a module are implemented in software, the program code may be stored and/or propagated on in one or more computer readable medium(s).

The computer readable medium may be a tangible computer readable storage medium storing the program code. The computer readable storage medium may be, for example, but not limited to, an electronic, magnetic, optical, electromagnetic, infrared, holographic, micromechanical, or semiconductor system, apparatus, or device, or any suitable combination of the foregoing.

More specific examples of the computer readable storage medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store program code for use by and/or in connection with an instruction execution system, apparatus, or device.

The computer readable medium may also be a computer readable signal medium. A computer readable signal medium may include a propagated data signal with program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport program code for use by or in connection with an instruction execution system, apparatus, or device. Program code embodied on a computer readable signal medium may be transmitted using any appropriate medium, including but not limited to wire-line, optical fiber, Radio Frequency (RF), or the like, or any suitable combination of the foregoing

In one embodiment, the computer readable medium may comprise a combination of one or more computer readable storage mediums and one or more computer readable signal mediums. For example, program code may be both propagated as an electro-magnetic signal through a fiber optic cable for execution by a processor and stored on RAM storage device for execution by the processor.

Program code for carrying out operations for aspects of the present invention may be written in any combination of one or more programming languages, including an object oriented programming language such as Python, Java, JavaScript, Smalltalk, C++, PHP or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). The computer program product may be shared, simultaneously serving multiple customers in a flexible, automated fashion.

The computer program product may be integrated into a client, server and network environment by providing for the computer program product to coexist with applications, operating systems and network operating systems software and then installing the computer program product on the clients and servers in the environment where the computer program product will function. In one embodiment software is identified on the clients and servers including the network operating system where the computer program product will be deployed that are required by the computer program product or that work in conjunction with the computer program product. This includes the network operating system that is software that enhances a basic operating system by adding networking features.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and computer program products according to embodiments of the invention. It will be understood that each block of the schematic flowchart diagrams and/or schematic block diagrams, and combinations of blocks in the schematic flowchart diagrams and/or schematic block diagrams, can be implemented by program code. The program code may be provided to a processor of a general purpose computer, special purpose computer, sequencer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

The program code may also be loaded onto a computer, other programmable data processing apparatus, or other devices to cause a series of operational steps to be performed on the computer, other programmable apparatus or other devices to produce a computer implemented process such that the program code which executed on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and computer program products according to various embodiments of the present invention. In this regard, each block in the schematic flowchart diagrams and/or schematic block diagrams may represent a module, segment, or portion of code, which comprises one or more executable instructions of the program code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and program code.

The schematic flowchart diagrams and/or schematic block diagrams in the Figures illustrate the architecture, functionality, and operation of possible implementations. It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Although various arrow types and line types may be employed in the flowchart and/or block diagrams, they are understood not to limit the scope of the corresponding embodiments. Indeed, some arrows or other connectors may be used to indicate only an exemplary logical flow of the depicted embodiment.

The description of elements in each figure may refer to elements of proceeding figures. Like numbers refer to like elements in all figures, including alternate embodiments of like elements.

Lenses for a wide field-of-view are typically compound lenses. The need to compensate and balance optical aberrations, which increase at the edges of the field-of-view, is fulfilled by the combinations of multiple elements having dioptric power and dissimilar refractive indices and Abbe numbers. It follows that the number of lens elements grows with the angle-of-view, or the field-of-view. Starting with the Cooke lens, a type of triplet lens with air spaced elements, that comprises a negative flint glass element in the center with a positive crown glass element on each side, increasing the field beyond a certain angle, say 40 degrees, requires the addition of a fourth element, rendering the new assembly a Tessar lens. Though both the Cooke and Tessar lenses were superseded by more advanced lenses, they made a comeback in recent years in devices such as mobile-phone cameras.

Lenses used in mobile-phone cameras consist typically of four to five powered elements. Because such lenses rely on abundant background illumination they do not require low F-number and are designed for an F-number of 4 or greater. Since the background does not present a problem they use broadband optical filters with gradual rollon and roll-off curves.

In cameras operating under low illumination conditions the F-number of the lens, a parameter that determines the entrance pupil of the lens, is of paramount importance since the lens ability to collect luminous or radiant flux is inversely proportional to the square of the F-number. It follows that cameras with low illumination level require a low F-number. Consistent with this scenario is a case in which background illumination must be minimized and where active illumination is applied to permit imaging of the field-of-view (FOV). In these cases a bandpass filter is disposed in the optical train to minimize such background while transmitting substantially the entire active illumination.

Because an optimal bandpass filter has a flattop transmission spectrum with steep roll-off curves about the center wavelength and strong blocking outside of the transmission band, the incidence angle of rays on the filters must be kept at low values. To enable this, a quasi-collimated zone is created in the lens where the bandpass filter is disposed. The embodiments provide a fast-aperture lens with an F-number of 1.25 made of three powered lens elements, for a field-of-view of 70 degrees. A certain embodiment includes the bandpass filter.

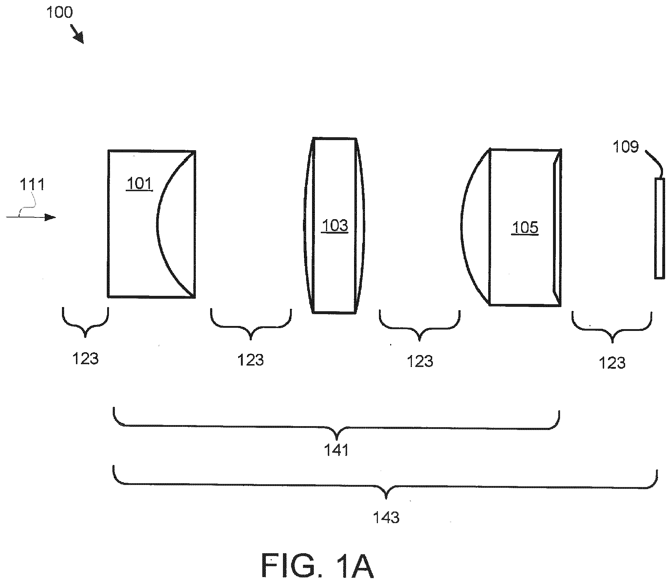

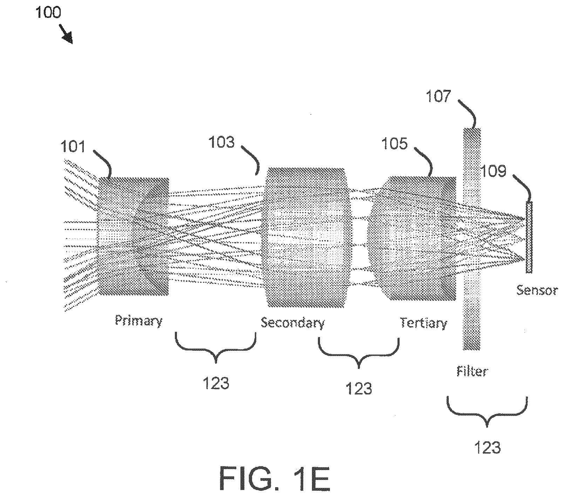

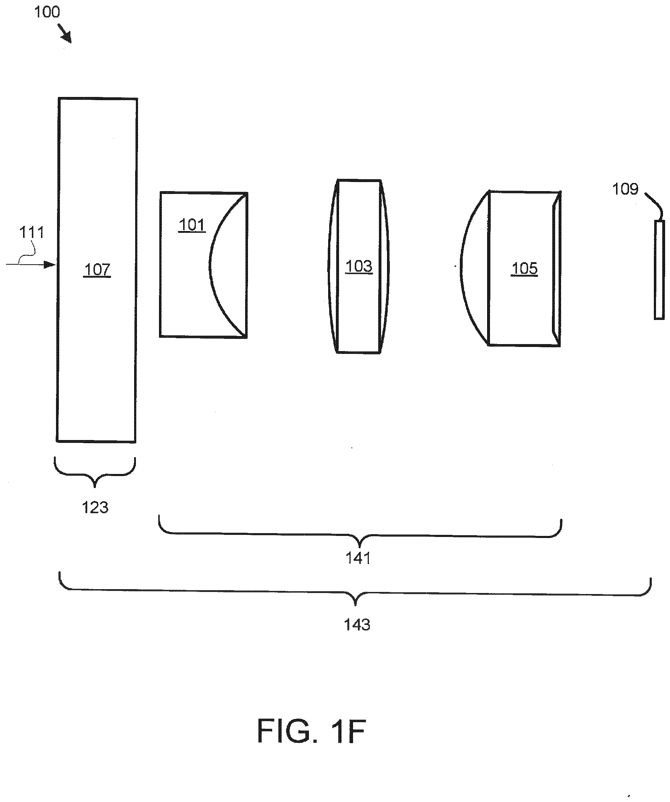

Figure 1A is a side view schematic drawing of one embodiment of a lens 100. In the depicted embodiment, the lens 100 is a compound lens comprising 3 elements: 3 powered elements or lens including a primary lens 101, a secondary lens 103, and a tertiary lens 105.

In one embodiment, all the powered lens elements including the primary lens 101, the secondary lens 103, and the tertiary lens 105 are made of moldable glass. At least one of the primary lens 101, the secondary lens 103, and the tertiary lens 105 may be aspherical on at least one surface. In a certain embodiment, the tertiary lens 105 is aspherical on at least one surface and functions as a field flattener. In one embodiment, the at least one surface is closest to the sensor 109.

The combination of the primary lens 101, the secondary lens 103, and the tertiary lens 105 may have an F-number of not more than 1.25, a field-of-view of at least 70 degrees, and focus rays of input light 111 thus forming an image of objects in the field-of-view on the sensor 109. The lens 100 includes a plurality of light path portions 123.

In one embodiment, the lens length 141 is in the range of 9 to 13 millimeters (mm). In addition, the total track length 143 may be in the range of 14 to 18 mm. In a certain embodiment, the lens length 141 is 11mm and the total track length 143 is 16mm. Table 1 illustrates one embodiment of a prescription for the lens 100.

**Table 1**

| Element | Power (diopter) | Index | Abbe number | Thickness (mm) | Aperture (mm) |
|---|---|---|---|---|---|
| Primary | -460 to - 375 | 1.85-1.95 | 20.86 - 20.885 | 1.05-1.15 | 3.6-3.8 |
| Air gap | 0 | 1.0003 | NA | 3.6-3.85 | |
| Secondary | 161 to 171 | 1.79-1.87 | 40.78-41.0 | 1.5-2.35 | 4.3-4.5 |
| Air gap | 0 | 1.0003 | NA | 0.14-0.20 | |
| Stop | 0 | 1.0003 | NA | 0 | 2.5-4.0 |
| Air gap | 0 | 1.0003 | NA | 0.12-0.60 | |
| Tertiary (Aspherical) | 257 to 263 | 1.67-1.69 | 31.06-31.19 | 2.35-2.49 | 3.8-4.0 |
| Air gap | 0 | 1.0003 | NA | 1.1-2.6 | |
| Sensor | | | | | |

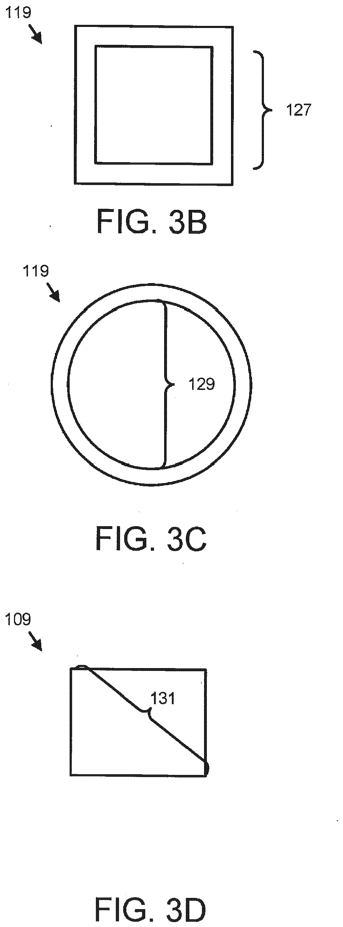

The sensor 109 may have a diagonal dimension of 1.5 to 2.0 mm. In a certain embodiment, the sensor 109 has a diagonal dimension of 1.8 mm (1/14 inch), making the lens 100 compatible with extremely compact sensors 109. The diagonal dimension is illustrated in Figure 3D. Though offering a smaller resolution, small sensors 109 are advantageous in the amount of light received in comparison with large sensors 109. The sensor 109 may be a semiconductor device such as a charge coupled device (CCD) and/or a complimentary metal-oxide semiconductor (CMOS) device. In an embodiment, the 1.8 mm sensor 109 has a pixel pitch of 10 micrometers, thus a total of 15,000 pixels for a sensor aspect ratio of 3:2, approximately 15,550 for a sensor aspect ratio of 4:3 and approximately 15,800 a sensor aspect ratio of 5:4. Considering that typically the electronic bandwidth of an individual pixel in a CCD sensor 109 is 10 MHz, this determines a sensor bandwidth of 700 Hz, or integration time of 0.5 millisecond (ms) for the sensor 109 with 15,000 pixels. In a certain embodiment, the sensor 109 is of the CMOS type, having typically an electronic bandwidth of 100kHz per row, or an integration time of about 0.35 ms per 100 rows. The integration time is approximately inversely proportional to the number of pixels.

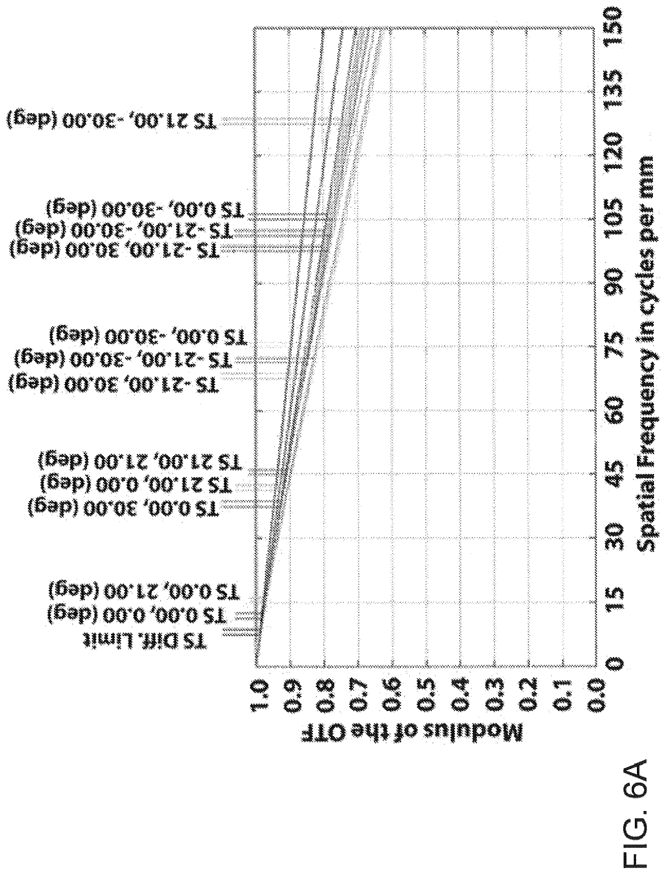

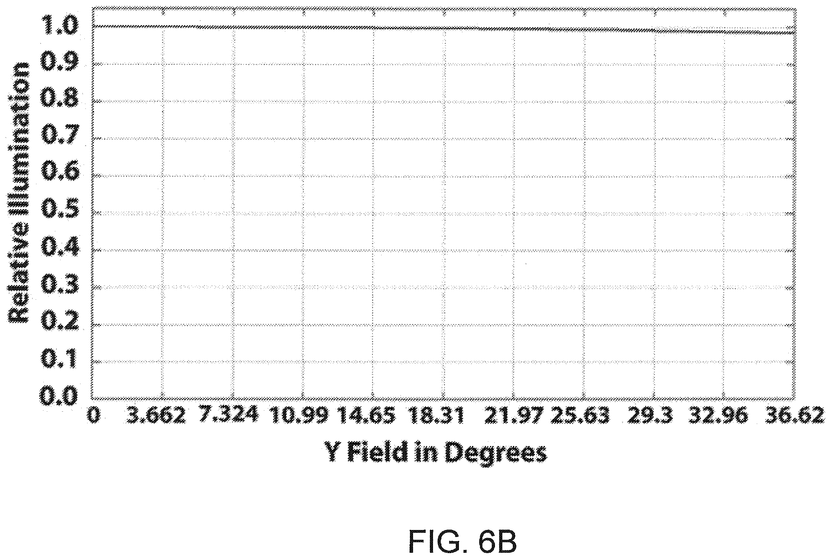

In one embodiment, the total transmission of the lens 100 at a specified wavelength of input light 111 is at least 85 percent. In one embodiment, the lens 100 has a MTF of greater than 50 percent at a spatial frequency of at least 150 line pairs (lp)/mm. The MTF of the lens 100 is described in more detail in Figure 6A. A relative intensity of the lens may be substantially uniform. As used herein, a substantially uniform relative intensity varies by at most 10 percent over an entire field-of-view of the lens. The relative intensity of the lens 100 is described in more detail in Figure 6B. The lens 100 may be athermal over a temperature range of -40 Celsius (C) degrees to 75C degrees. In one embodiment, the temperature of the lens 100 is between -40C degrees and 75C degrees.

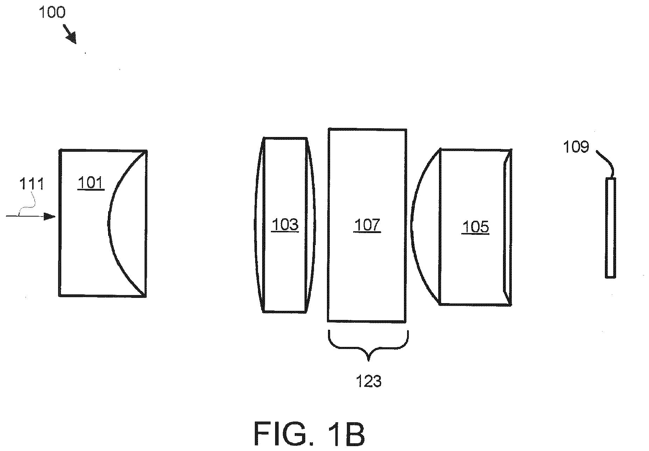

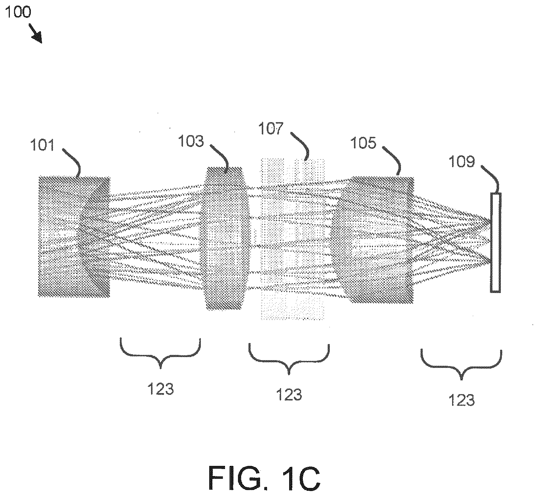

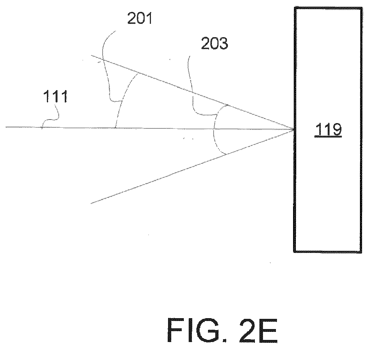

Figure 1B is a side view schematic drawing of one embodiment of the lens 100. In the depicted embodiment, the lens 100 is a compound lens comprising 3 powered elements or lens including the primary lens 101, the secondary lens 103, and the tertiary lens 105. In addition, the lens 100 comprises a bandpass filter 107 disposed at the first light path portion 123. In the depicted embodiment, the bandpass filter 107 is disposed at the first light path portion 123 behind the secondary lens 103 and before the tertiary lens 105 relative to the input light 111. Additional embodiments with the bandpass filter 107 disposed at other light path portions 123 will be described hereafter. In one embodiment, the bandpass filter 107 is disposed in a quasi-collimated zone of a light path portion 123. In a certain embodiment, a cone half angle of the input light 111 in the light path portion 123 is less than 10 degrees. Figures 1C and 2E illustrates the cone half angle.

The lens 100 with the bandpass filter 107 may transmit at least 85 percent of a specified wavelength of the input light 111 to the sensor 109. In an embodiment, the lens 100 images a field-of-view of at least 70 degrees, with an F-number of not more than 1.25. In addition, the lens 100 exhibits a diffraction limited MTF up to 150 line lp/mm, uniform relative illumination and distortion of up to 18 percent. The total in band transmission of the lens 100 at a specified wavelength of input light 111 may be in the range of 75 percent to 95 percent. In a certain embodiment, the total in band transmission of the bandpass filter 107 at the specified wavelength of input light 111 is 95 percent and the out of band transmission is substantially opaque. As used herein, substantially opaque refers to a transmission of less than 1 percent.

In one embodiment, the bandpass filter 107 has a Full Width at Half Maximum (FWHM) in the range of 2-30 nm about the specified wavelength and a roll off slope of not less than 10 dB/nm. The bandpass filter 107 may have a spectral bandpass centered at a specified wavelength selected from the group consisting of 840-860 nm, 930-950 nm, and 800-1000 nm. In one embodiment, the compound lens 100 forms an optimally sharp image using light at the wavelengths of in the range of 840-860 nm and/or 930-950 nm. In a certain embodiment, the compound lens 100 forms an optimally sharp image using light at the wavelengths in the range of 800-1000 nm.

In one embodiment, the bandpass filter 107 has a spectral bandpass centered at 857nm and a Full Width at Half Maximum (FWHM) of 30nm. In one example, if the background radiation is that of the sun, casting an integrated irradiance over the entire spectrum of 1kW/m² on an object in the field-of-view, then the background irradiance is reduced by the bandpass filter 107 to approximately 40 watts (W)/meter² (m) through the bandpass filter 107. The effective background irradiance may be further reduced proportionally by using a narrower bandpass filter 107. In an exemplary embodiment bandpass filter 107 with a FWHM of 2nm may be employed. In one embodiment, irradiance included by the active illumination on an object in the field-of-view may exceed 40 W/m².

Conversely, placement of a bandpass filter 107 behind an imaging lens exposes the filter to incidence angles of the entire FOV. This degrades the bandpass filter performance in three ways: shifting the center wavelength to the blue side of the spectrum, reduction of the peak transmission and relaxing the rollon-rolloff slopes. For instance, for a case where the cone half-angle is 45° the effect on the above mentioned bandpass filter 107 would be: a center wavelength shift to 825nm, a peak transmission drop to 50 percent and broadening of the FWHM to 70nm.

In one embodiment, the lens length 141 is in the range of 9 to 13 millimeters (mm). In addition, the total track length 143 may be in the range of 14 to 18 mm. In a certain embodiment, the lens length 141 is 11mm and the total track length 143 is 16mm. A prescription of one embodiment of the lens 100 is given in Table 2.

**Table 2**

| Element | Power (diopter) | Index | Abbe number | Thickness (mm) | Aperture (mm) |
|---|---|---|---|---|---|
| Primary | -455.52 | 1.89 | 20.87 | 1.1 | 3.7 |
| Air gap | 0 | 1.0003 | NA | 3.786 | |
| Secondary | 167.48 | 1.80 | 40.84 | 1.572 | 4.4 |
| Air gap | 0 | 1.0003 | NA | 0.15 | |
| Stop | 0 | 1.0003 | NA | 0 | 3.2 |
| Air gap | 0 | 1.0003 | NA | 0.15 | |
| Filter | 0 | 1.51 | 64.17 | 2 | 4 |
| Air gap | 0 | 1.0003 | NA | 0.150 | |
| Tertiary (Aspherical) | 262.64 | 1.68 | 31.08 | 2.406 | 3.9 |
| Air gap | 0 | 1.0003 | NA | 2.6 | |
| Sensor | | | | | |

figure 1C is a side view schematic diagram or one embodiment or light paths 123 through the lens 100 of Figure 1B. Both Figures 1B and 1C correspond to the prescriptions in Tables 2 and 3.

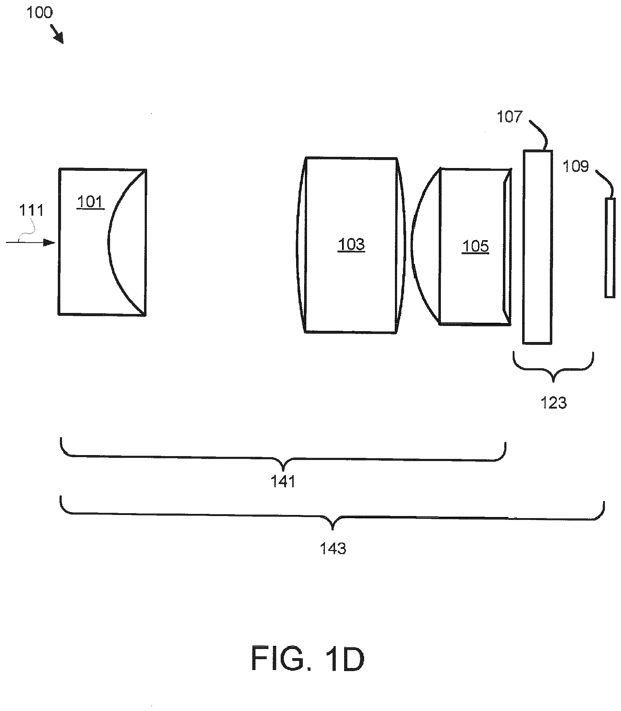

Figure 1D is a side view schematic diagram of the lens 100 according to an alternate embodiment. In the depicted embodiment, the lens 100 is a compound lens comprising 3 powered elements or lens including the primary lens 101, the secondary lens 103, and the tertiary lens 105. In addition, the lens 100 comprises the bandpass filter 107 disposed at the first light path portion 123. In the depicted embodiment, the bandpass filter 107 is disposed at the first light path portion 123 behind the tertiary lens 105 relative to the input light 111.

In one embodiment, the lens length 141 is in the range of 9 to 13 millimeters (mm). In addition, the total track length 143 may be in the range of 14 to 18 mm. In a certain embodiment, the lens length 141 is 11mm and the total track length 143 is 16mm. A prescription of one embodiment of the lens 100 is given in Table 3.

**Table 3**

| Element | Power (diopter) | Index | Abbe number | Thickness (mm) | Aperture (mm) |
|---|---|---|---|---|---|
| Primary | -449.89 | 1.923 | 20.883 | 1.1 | 3.7 |
| Air gap | 0 | 1.0003 | NA | 3.550 | |
| Secondary | 170.81 | 1.806 | 40.95 | 1.778 | 4.4 |
| Air gap | 0 | 1.0003 | NA | 0.197 | |
| Stop | 0 | 1.0003 | NA | 0 | 3.2 |
| Air gap | 0 | 1.0003 | NA | 0.127 | |
| Filter | 0 | 1.51 | 64.17 | 2 | 4 |
| Air gap | 0 | 1.0003 | NA | 0.190 | |
| Tertiary (Aspherical) | 259.66 | 1.689 | 31.185 | 2.483 | 3.9 |
| Air gap | 0 | 1.0003 | NA | 1.536 | |
| Sensor window | 0 | 1.5233 | 54.517 | 0.55 | |
| Air gap | 0 | 1.0003 | NA | 1.536 | |
| Sensor | | | | | |

Figure IE is a side view schematic diagram of one embodiment of light paths 123 through the lens 100 of Figure 1D.

Figure IF is a side view schematic diagram of a lens according to an alternate embodiment. In the depicted embodiment, the lens 100 is a compound lens comprising 3 powered elements or lens including the primary lens 101, the secondary lens 103, and the tertiary lens 105. In addition, the lens 100 comprises the bandpass filter 107 disposed at the first light path portion 123. In the depicted embodiment, the bandpass filter 107 is disposed at the first light path portion 123 before the primary lens 101 relative to the input light 111.

In one embodiment, the lens length 141 is in the range of 9 to 13 millimeters (mm). In addition, the total track length 143 may be in the range of 14 to 24 mm. In a certain embodiment, the lens length 141 is 11mm and the total track length 143 is 16mm. A prescription of one embodiment of the lens 100 in Figures 1A, 1D, and IE is given in Table 4.

**Table 4**

| Element | Power (diopter) | Index | Abbe number | Thickness (mm) | Aperture (mm) |
|---|---|---|---|---|---|
| Primary | -378.25 | 1.923 | 20.883 | 1.1 | 3.7 |
| Air gap | 0 | 1.0003 | NA | 4.143 | |
| Secondary | 161.79 | 1.806 | 40.95 | 2.311 | 4.4 |
| Air gap | 0 | 1.0003 | NA | 0.18 | |
| Stop | 0 | 1.0003 | NA | 0 | 3.2 |
| Air gap | 0 | 1.0003 | NA | 0.544 | |
| Tertiary (Aspherical) | 258.61 | 1.689 | 31.185 | 2.368 | 3.9 |
| Air gap | 0 | 1.0003 | NA | 1.209 | |
| Sensor window/filter | 0 | 1.5233 | 54.517 | 0.7 | |
| Air gap | 0 | 1.0003 | NA | 0.6 | |
| Sensor | | | | | |

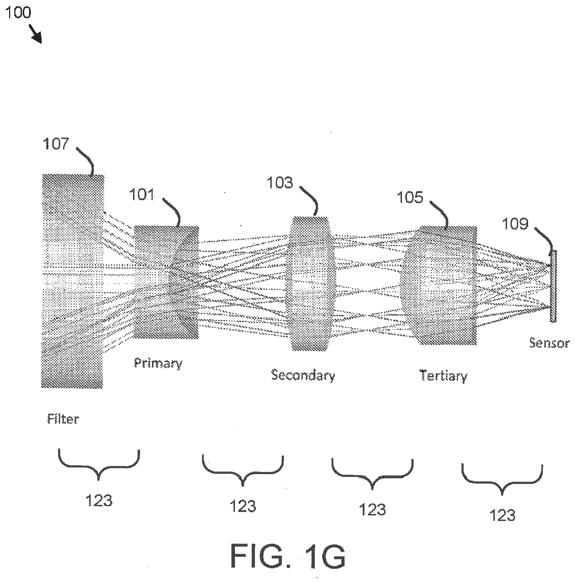

Figure 1G is a side view schematic diagram of one embodiment of light paths 123 through the lens 100 of Figure IF.

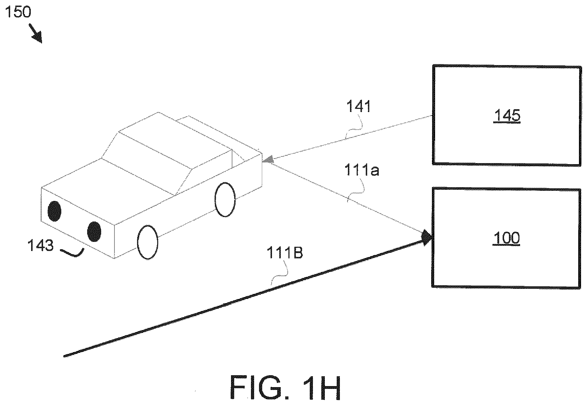

Figure 1H is a schematic diagram of an optical system 150. In one embodiment, the optical system 150 is a lidar optical system 150. The optical system 150 includes the lens 100 of Figures 1A-G. The lens 100 receives input light 111 from the environment. The input light 111 may include background radiation input light 111b. The background radiation input light 111b may be both spectrally and geometrically minimized by the lens 100.

In one embodiment, a light source 145 generates active illumination light 141. The active illumination light 141 may be to illuminate the environment for three-dimensional (3D) photography. The active illumination light 141 may be a pulsed light active illumination light 141. The active illumination light 141 may be a laser active illumination light 141. In a certain embodiment, the active illumination light 141 is a lidar active illumination light 141. The active illumination light 141 may scatter and/or reflect off object 143 in the environment and be received as an active illumination input light 111a by the lens 100. Thus, the active illumination input light 111a may include the active illumination light 141.

The embodiments filter the background radiation light 111b from the active illumination input light 111a to maintain illumination magnitude exceeding that of the background illumination. As a result, the sensor 109 may detect the active illumination input light 111a for lidar navigation, 3D photography, or the like. The example, the optical system 150 may be incorporated in a lidar system that detects objects 143.

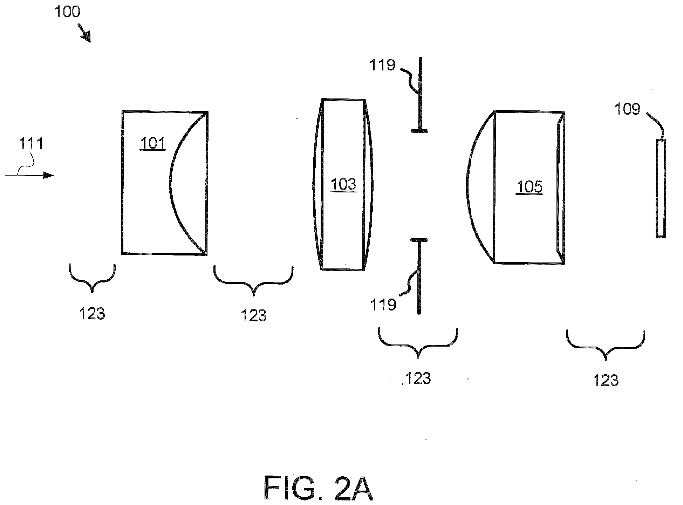

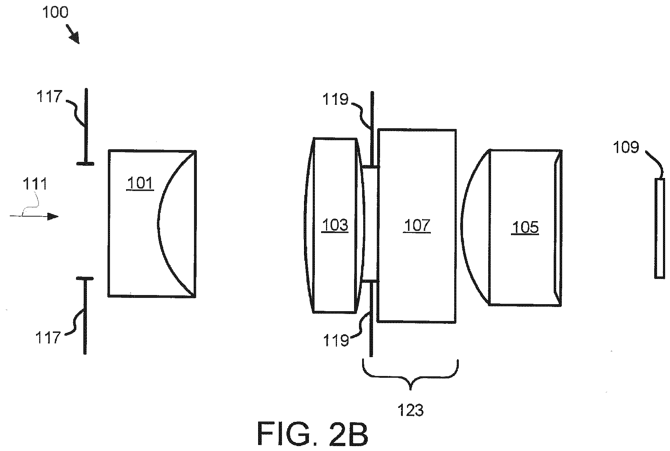

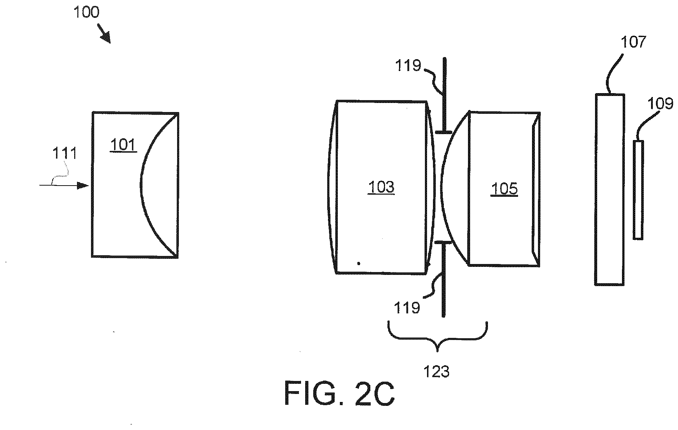

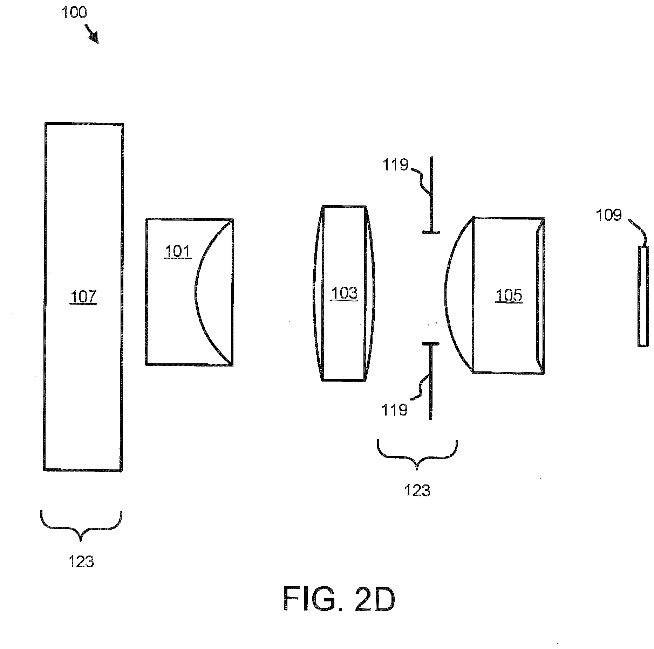

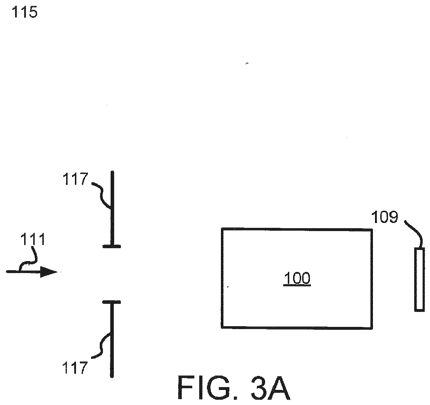

Figures 2A-2D are side view schematic diagrams of the lens 100 with a stop 119. The lenses 100 of Figures 1A, 1B, ID, and IF are shown in Figures 2A, 2B, 2C, and 2D respectively with a stop 119 disposed behind the secondary lens 103 relative to the input light 111. The stop 119 may one of a square stop 119 with a side width in the range of 2.5 to 4.0 mm as shown in Figure 3C and a round stop 119 with a diameter in the range of 2.5 to 4.0 mm as shown in Figure 3D. In Figure 2B, an entrance aperture 117 is shown disposed within the lens 100. The lens 100 may include an entrance aperture 117 along a light path portion 123. In one embodiment, a half-angle 201 of a cone of incidence 203 is not greater than 8 degrees through the stop 119 as shown in Figure 2E.

Figure 3A is a side view schematic diagram of the lens 100 with an entrance aperture 117. In one embodiment, the entrance aperture 117 is disposed before the first surface of the primary lens 101 relative to the input light 111 to limit the field-of-view to a desired rectangular shape. The entrance aperture 117 may have a diagonal size in the range of 6.5 to 7.5 mm. in a certain embodiment, the entrance aperture 117 has a diagonal size of 6.8 mm.

Figure 3B is a front view drawing of the stop 119. In the depicted embodiment, the stop 119 is a square shaped stop 119. The stop 119 may have a side width 127 in the range of 2.5 to 4.0 mm. In a certain embodiment, the side width 127 is 3.2 mm.

Figure 3C is a front view drawing of the stop 119. In the depicted embodiment, the stop 119 is a round shaped stop 119. The stop 119 may have a diameter 129 in the range of 2.5 to 4.0 mm. In a certain embodiment, the diameter 129 is 3.2 mm.

Figure 3D is a front view drawing of the sensor 109. In the depicted embodiment, the sensor 109 has a diagonal dimension 131.

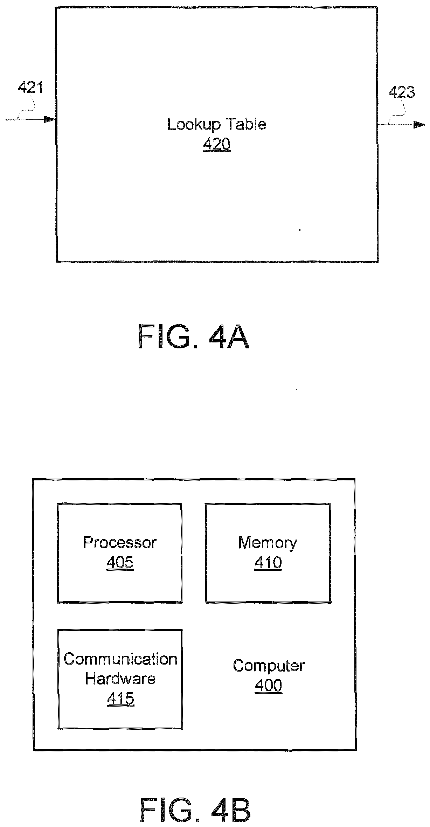

Figure 4A is a schematic block diagram of a lookup table 420. In one embodiment, the lens 100 offers little distortion correction. The lookup table 420 may be employed to correct the distortion of the lens 100. The lookup table 420 may receive sensor data 421 as an input and generate distortion corrected sensor data 423 as an output. This is accomplished by reassigning charge values of pixels in the sensor 109 to new addresses, based on translating measured pixel coordinates to the corrected coordinates. More rigorously, the new address-matrix is the sum of the measured address-matrix and a correction matrix, where the latter is constructed in accordance to the linear values of the distortion in local coordinates.

Figure 4B is a schematic block diagram of a computer 400. The computer 400 may execute an algorithmic transformation to correct distortion of the lens 100. In the depicted embodiment, the computer 400 includes a processor 405, a memory 410, and communication hardware 415. The memory 410 may store code including the conformal transformation. The processor 405 may execute the code. The communication hardware 415 may communicate with the sensor 109 and other devices. The computer 400 may perform the algorithmic transformation to correct the distortion of the lens 100. In an embodiment, the computer 400 may execute distortion correction based on the pixel address reassignment by a lookup table 420. In another embodiment, the distortion may be corrected by a suitable algorithmic transformation based on computing a set of equations.

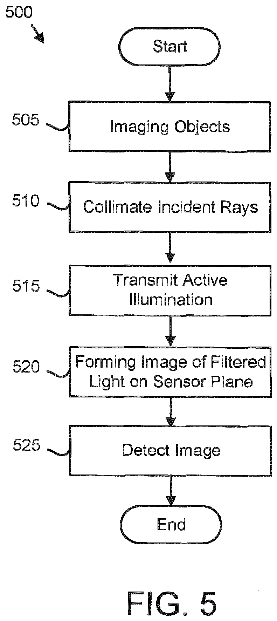

Figure 5 is a schematic flow chart diagram illustrating one embodiment of a light pulse sensing method 500. The method 500 may employ the lens 100 to sense a specified wavelength of input light 111 at the sensor 109. The method 500 may be performed by one or more of the lens 100, the sensor 109, the optical system 150, the lookup table 420, and the computer 400.

The method 500 starts, and in one embodiment, the lens 100 images 505 objects 143 from the environment. The input light 111 may include both background radiation input light 111b and an active illumination input light 111a. The active illumination input light 111a may be at a specified wavelength and/or a specified wavelength range. In one embodiment, the lens 100 receives the input light 111 over field-of-view of at least 70 degrees. Because the F-number of the lens 100 is not more than 1.25, the lens 100 gathers significantly more light than would be gathered by a lens with a greater F-number.

The lens 100 may collimate 510 the incident rays of the input light 111. The incident rays may be collimating by the combination of one or more of the primary lens 101, the secondary lens 103, and the tertiary lens 105. The cone half angle of the collimated input light 111 in the light path portion 123 may be less than 10 degrees.

In a certain embodiment, the lens 100 transmits 515 the specified wavelength of the active illumination input light 111a and filters out the background radiation input light 111b so that the active illumination input light 111a may be detected with a greater signal-to-noise ratio. The bandpass filter 107 may transmit at least 85 percent of the specified wavelength of the input light 111 to the sensor 109. In one embodiment, the bandpass filter 107 has a FWHM in the range of 2-30 nm about the specified wavelength and a roll off slope of not less than 10 dB/nm. The bandpass filter 107 may have a spectral bandpass centered at a specified wavelength selected from the group consisting of 840-860 nm, 930-950 nm, and 800-1000 nm.

The lens 100 further forms 520 an image from the filtered input light 111 on the sensor 109. The sensor 109 may detect 525 the object 143 in the field-of-view of the compound lens 100 at the specified wavelength and/or the specified wavelength range of the active illumination input light 111a and the method 500 ends. The detected active illumination input light 111a may be used to determine the 3-dimensional position in lens coordinates of an object 143 relative to the lens 100.

Figure 6A is a graph illustrating the MTF of the lens 100 of Figure 1B, showing the MTF for spatial frequencies in cycles per nm. The graph indicates that the lens 100 facilitates image resolution in excess of 1/2/150 nm, namely about 3 micrometers (µm).

Figure 6B is a graph illustrating the relative illumination of the lens 100 of Figure 1B. The graph indicates that the relative illumination at the edge of the field-of-view is only a few percent less than at the center of the field-of-view.

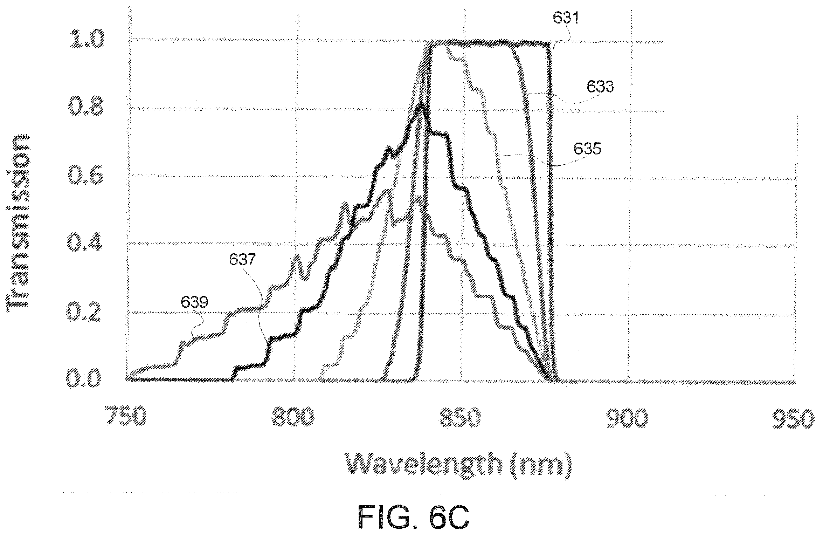

Figure 6C is a graph illustrating the transmission spectrum of the bandpass filter 107 for rays at various cone half-angles (CHA) of 0 degrees CHA 631, 15 degrees CHA 633, 25 degrees CHA 635, 35 degrees CHA 637, 45 degrees CHA 639, wherein 1.0 is complete transmission of the wavelength. In the depicted embodiment, there is substantially insignificant transmission degradation up to 15°. As used herein, substantially insignificant transmission degradation is less than 10 percent degradation at a specified wavelength.

### Problem/Solution

Applications such as autonomous navigation and 3D photography require detecting an active illumination input light 111a from background radiation input light 111b. Unfortunately, when the background radiation input light 111b is strong, particularly in direct sunlight, it is difficult to filter the background radiation input light 111b from the desired active illumination input light 111a. Bandpass filters 107 have been used, but because of the wide field-of-view in many applications, the bandpass filters 107 had unacceptably low transmission of desired specified wavelengths and wide acceptance of the background light.

The embodiments provide a lens 100 that collimates the input light 111 from a wide field-of-view. The collimated input light 111 may be filtered by the bandpass filter 107 to transmit up to 95 percent of the specified wavelength of the active illumination input light 111a while the transmission of the background radiation input light 111b is substantially reduced. As a result, the sensor 109 can detect the active illumination input light 111a. The design of the lens 100 increases the efficiency of the sensor 109.

This description uses examples to disclose the invention and also to enable any person skilled in the art to practice the invention, including making and using any devices or systems and performing any incorporated methods. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A compound lens comprising:
a primary lens;
a secondary lens; and
a tertiary lens, wherein a combination of the primary lens, the secondary lens, and the tertiary lens has an F-number of not more than 1.25, a field-of-view of at least 70 degrees, and images objects from the field-of-view on a sensor.

2. The compound lens of claim 1, the lens further comprising a bandpass filter disposed at a first light path portion, wherein the compound lens with the bandpass filter transmits at least 85 percent of a specified wavelength of the input light to the sensor.

3. The compound lens of claim 2, wherein one of:
the bandpass filter is disposed at the first light path portion behind the secondary lens and before the tertiary lens relative to the input light;
the bandpass filter is disposed at the first light path portion behind the tertiary lens relative to the input light; and
the bandpass filter is disposed at the first light path portion before the primary lens relative to the input light.

4. The compound lens of claim 2 or 3, wherein the bandpass filter has a Full Width at Half Maximum (FWHM) in the range of 2-30 nanometers (nm) about the specified wavelength and a roll off slope of not less than 10 decibels (dB)/nm; or
wherein the bandpass filter has a spectral bandpass centered at the specified wavelength selected from the group consisting of 840-860 nm, 930-950 nm, and 800 to 1000 nm.

5. The compound lens of one of claims 2 to 4, the bandpass filter further comprising a stop at the bandpass filter with a size in the range of 2.5 to 4.0 millimeter (mm).

6. The compound lens of claim 5, the lens further comprising a stop disposed behind the secondary lens relative to the input light, wherein a half-angle of a cone of incidence is not greater than 8 degrees through the stop.

7. The compound lens of one of claims 1 to 6, wherein at least one of the primary lens, the secondary lens, and the tertiary lens is aspherical on at least one surface.

8. The compound lens of claim 7, wherein the tertiary lens is aspherical on at least one surface and functions as a field flattener; or
wherein the tertiary lens is aspherical on the surface adjacent to the sensor and functions as a field flattener.

9. The compound lens of one of claims 1 to 8, wherein the compound lens has a Modulus of Optical Transfer Function (MTF) of greater than 50 percent at a spatial frequency of at least 150 line pairs (lp)/mm.

10. The compound lens of one of claims 1 to 9, wherein a relative intensity of the lens is substantially uniform, varying by at most 10 percent over an entire field-of-view of the lens and the total transmission of the lens is at least 85 percent.

11. The compound lens of one of claims 1 to 10, at least one of:
the apparatus further comprising the sensor, wherein the sensor has a diagonal dimension of 1.8 mm; and
wherein the sensor is corrected by at least one of a lookup table and an algorithmic transformation.

12. The lens of one of claims 1 to 11, wherein the primary lens, the secondary lens, and the tertiary lens are formed of moldable glass and the lens has the following prescription:
| Element | Power (diopter) | Index | Abbe number | Thickness (mm) | Aperture (mm) |
|---|---|---|---|---|---|
| Primary | -460 to - 375 | 1.85-1.95 | 20.86 - 20.885 | 1.05 - 1.15 | 3.6-3.8 |
| Air gap | 0 | 1.0003 | NA | 3.6-3.85 | |
| Secondary | 161 to 171 | 1.79-1.87 | 40.78-41.0 | 1.5-2.35 | 4.3-4.5 |
| Air gap | 0 | 1.0003 | NA | 0.14-0.20 | |
| Stop | 0 | 1.0003 | NA | 0 | 2.5-4.0 |
| Air gap | 0 | 1.0003 | NA | 0.12-0.60 | |
| Tertiary (Aspherical) | 257 to 263 | 1.67-1.69 | 31.06-31.19 | 2.35-2.49 | 3.8-4.0 |
| Air gap | 0 | 1.0003 | NA | 1.1-2.6 | |

13. The compound lens of one of claims 1 to 12, wherein the temperature of the compound lens is between -40 Celsius (C) degrees and 75C degrees.

14. A system comprising:
a light source that generates pulsed light;
a sensor that detects the pulsed light; and
a compound lens comprising:
a primary lens;
a secondary lens; and
a tertiary lens, wherein a combination of the primary lens, the secondary lens, and the tertiary lens has an F-number of not more than 1.25, a field-of-view of at least 70 degrees, and images objects from the field-of-view on the sensor.

15. A method comprising:
imaging objects from a field-of-view of at least 70 degrees with an F-number of not more than 1.25;
collimating incident rays, wherein a cone half angle of the collimated input light is less than 10 degrees;
transmitting active illumination of the collimated input light at a specified wavelength with Full Width at Half Maximum (FWHM) in the range of 2-30 nanometers (nm) about the specified wavelength and a roll off slope of not less than 10 decibels (dB)/nm;
forming an image from the filtered input light on a sensor; and
detecting the image with the sensor.
